# NEW EUROPEAN PATENT SPECIFICATION

(11) **EP 0 560 579 B2**
(45) Date of publication and mention of the opposition decision: **12.09.2007**
(45) Mention of the grant of the patent: 09.07.1997
(21) Application number: 93301783.2
(22) Date of filing: 09.03.1993
(51) Int. Cl.: H01M 2/02, H01M 12/06

(54) **Mercury free miniature zinc-air cells**
Quecksilberfreie Zink-Luft-Miniatur-Zelle
Cellule zinc-air miniature sans mercure

(30) Priority: 09.03.1992 US 848497
(43) Date of publication of application: 15.09.1993
(73) Proprietor: EVEREADY BATTERY COMPANY, INC., St. Louis Missouri 63164 (US)
(72) Inventor: Mansfield, Robert Nile Jr., Valley View Ohio 44125 (US); Scarr, Robert Francis, Westlake Ohio 44145 (US)
(74) Representative: von Kreisler Selting Werner

(56) References cited:
- US-A- 4 500 614
- PATENT ABSTRACTS OF JAPAN vol. 4, no. 170 (E-35)(652) 22 November 1980 and JP-A-55 119 345
- D. Linden - Handbook of Batteries and Fuel Cells, McGraw-Hill (1984), Sect. 7-7, 7-8, 10-5 to 10-7
- Patent Abstracts of Japan JP-59 194 361
- Patent Abstracts of Japan JP-61 061 364
- Patent Abstracts of Japan JP-61 183 866
- Texas Instruments Brochure "Clad Metals for Batteries, 1991
- Translation of JP-61 183866
- Translation of JP-61 061364

## Description

The present invention relates to a mercury free miniature zinc-air cell and including an anode cup which is coated and which contacts the zinc electrode of the cell. The present invention also provides a process for the manufacture of such a coated anode cup for use In a mercury free miniature zinc-air cell.

Alkaline electrochemical cells employing a zinc anode and an alkaline electrolyte have become commercially important as a relatively high rate source of electrical energy. The alkaline electrolyte, which is usually concentrated aqueous potassium hydroxide, is a principal factor contributing to the ability of these cells to deliver high rates of electrical energy. Such cells are clearly superior when compared with the older Leclanche cells having an electrolyte of zinc chloride and/or ammonium chloride.

However, the presence of alkali in an electrochemical cell has both advantages and disadvantages. The disadvantages include, for instance, the strong promotion by the alkali of the reaction of water with zinc, thereby causing corrosion. Without means to control this reaction, and therefore the corrosion, the shelf life of alkaline zinc cells would be unacceptably short. A further disadvantage is the release of hydrogen gas by the reaction between alkali and zinc. As a result of this, there may be a danger of electrolyte leakage and/or cell disassembly.

In commercial alkaline zinc cells, the reaction between zinc and alkali has been controlled or reduced to an acceptable rate by the addition of mercury to the cell. However, it has recently become apparent that the Introduction of mercury into the environment may be a hazard to human health, as well as to other forms of life. While individual cells contain only a small amount of mercury, the very large number of zinc alkaline cells marketed today could cause significant quantities of mercury to enter the environment upon disposal of the cells.

Because of the heightened consciousness towards the environment, many attempts have been made to reduce the amount of mercury used in an alkaline cell, and even to eliminate the mercury component altogether.

In alkaline batteries of the most common and standard sizes, e.g. the AA, C and D sizes, this mercury reduction has taken many forms. For example, in US-A-3,847,699 an alkaline zinc-manganese dioxide cell is described in which the proportion of mercury needed to achieve acceptable storage life can be reduced by the addition of small amounts of an ethylene oxide polymer US-A-4,500,614, on the other hand, tackles the problem of reducing the amount of mercury in a standard alkaline cell by amalgamating an alloy powder made of zinc and at least two of the metals gallium, indium and thallium to form the anode. The effect of this is to prevent corrosion of the zinc by the alkaline electrolyte, and thereby the generation of hydrogen gas and subsequent leakage of the electrolyte.

Also relevant is Japanese unexamined patent application 01-307161, which is directed to a mercury-free standard alkaline cell wherein the collector for the negative electrode is coated with indium and/or lead. The coating can be applied by any appropriate method, including electroplating.

Alternative methods to reduce the corrosion of the zinc electrode are described in DE-B-1,086,309 and JP-A-1958-3204. German Patent 1,086,309 discloses an alkaline zinc cell in which an indium compound is added to the electrolyte and/or indium metal is alloyed with refined zinc so as to protect the zinc against corrosion in an acidic, neutral or alkaline electrolyte. Japanese Publication No. 1958-3204, published April 26,1958, on the other hand, states that the addition of 0.0001% to 2.0% indium to pure zinc base alloy containing one, two, or more of the metallic elements Fe, Cd, Cr, Pb, Ca, Hg, Bi, Sb, Al, Ag, Mg, Si, Ni, Mn, etc., results in the formation of a zinc alloy which has a high corrosion resistance and which is suitable for use in primary cells.

As the large amount of prior art indicates, manufacturers of alkaline batteries have invested substantial amounts of time and money in the effort to develop mercury-free batteries. The first batteries to incorporate mercury-free constructions were the AA, C and D standard alkaline batteries. These batteries have historically used the largest quantities of mercury per cell and are the most common sizes and type purchased by consumers. Therefore, removing mercury from these batteries has proved to be the best way to make significant reductions to the quantity of mercury currently entering the general waste stream by disposal of used alkaline cells.

However, in addition to developing mercury-free standard alkaline batteries, the development of miniature zinc-air cell constructions which are free of mercury has also proved desirable. Miniature zinc-air cells include those which are smaller than the standard size battery, for example the "675 size" which measures 5.33 mm in height and 11.557 mm in diameter. While a layman may believe that the technology used to produce mercury-free standard alkaline batteries can be used to produce mercury-free miniature zinc-air batteries, this is not, in fact, the case. Instead, the manufacturers of miniature zinc-air batteries have found that additional technology is needed before mercury-free miniature zinc-air cells can be manufactured on a commercial basis. Because the construction of a miniature zinc-air battery is substantially different from the construction of a standard alkaline battery, new processes and techniques that are only relevant to the miniature zinc-air cells are required.

In view of the above, it is apparent that further development in the field of mercury free miniature zinc-air cells is required.

It is an object of the present invention to provide a miniature zinc-air cell which has a mercury-free zinc-containing anode.

It is another object of the present invention to provide a miniature zinc-air cell with a zinc-containing anode wherein the surface of the anode cup contacting the zinc-containing anode is treated so as to compensate for the absence of mercury in the cell.

It is a further object of the present invention to provide a method for producing an anode cup for use in a mercury free miniature zinc-air cell.

These and other objects of the invention will be apparent from the following description.

The present invention provides, in a first aspect, a alkaline miniature zinc-air cell including a zinc-containing anode mercury free, and an anode cup, the cup physically and electrically contacting the anode and consisting of a conductive substrate, characterised in that a surface of the cup contacting the anode is at least partially coated with copper to form an underlayer, at least a portion of the underlayer being overlaid with a layer of indium.

In an embodiment of this aspect of the invention, the surface of the anode cup opposing that surface contacting the anode is coated with a layer of nickel.

In a second aspect, the present invention provides a method as claimed in claim 12 for the production of an anode cup for an alkaline miniature zinc-air cell as hereinabove defined.

In a further aspect, the present invention provides a mercury free miniature zinc-air cell employing a manganese dioxide-containing cathode and a zinc-containing anode assembled within a conductive housing comprising a cathode cup having at least one opening to permit air to enter and said cathode cup being electrically contacted to the manganese dioxide containing electrode; an anode cup electrically and physically contacted to the zinc-containing electrode; said cathode cup secured to and insulated from the anode cup; and said anode cup comprising a conductive substrate having on a portion of at least the inner surface contacted to the zinc-containing electrode an underlayer of copper and a top layer of indium.

Preferred embodiments are claimed in the dependent claims.

In the present invention, the surface of the anode cup contacting the anode has at least a partial coating of copper. The effect of this underlayer is to resist passivation and/or attack by the electrolyte in the cell, characteristics which the conductive substrate of the anode cup may or may not possess. The underlayer also provides a surface onto which the overlayer can be effectively applied.

The thickness of the underlayer is not essential to the present invention and a thickness appropriate to the application of the cell can readily be determined by the man skilled in the art. We generally prefer that the underlayer is more than 0.0254 µm [1 microinch] thick, more preferably more than 254 µm[100 microinches] thick. It is most preferred that this layer is from 25.4 µm [1000 microinches] to 50.8 µm [2000 microinches] thick.

The underlayer on the anode cup of the cell according to the present invention Is at least partially coated with the metal indium.

The metal coating on the anode cup may be continuous or discontinuous. The choice of continuity or discontinuity of the coating is dependent on, for example, the environment in which the cell is to be used. Thus for example, when the environment involves high temperatures, it may be advantageous for the coating to be discontinuous, i.e. to cover only a part of the surface of the anode cup contacting the anode. In such situations it is preferred that the coating covers less than 95% of the surface area of the anode cup contacting the anode. The presence of a discontinuous coating, as described above, will allow a portion of said underlayer to contact the zinc-containing electrode, For use of the cell in ambient temperatures, for example of about 20°C, however, a continuous coating is preferred.

The thickness of the metal coating on the anode cup is dependent on various factors, including, for example, the requirement for elimination of mercury from the cell without affecting the characteristics of the cell; and the cost of the metal layer. Although the upper limit of the thickness of the metal layer is largely determined by cost, we prefer that this thickness does not exceed 1.27 µm [50 microinches]. A suitable range of thickness for this layer Is 0.0127 µm [0.5 microinches] to 1.27 µm [50 microinches] although, in practical terms, no additional benefit is achieved if the thickness of the layer exceeds 0.762 µm [30 microinches]. It is generally preferred to keep the thickness within the range 0.0254 µm [1 microinch] to 0.127 µm [5 microinches] and most preferably within the range 0.0254 µm [1 microinch] to 0.0762 µm [3 microinches].

The anode cup of the present invention is formed from a conductive substrate. Typically, this substrate is a metal, and it is preferred that this substrate is cold rolled steel, stainless steel or brass. Because cold rolled steel is a satisfactory substrate and is inexpensive, it is the preferred substrate for the anode cup. The steel may be obtained in the form of rolls of strip stock in which the width of the strip is much greater than the thickness of the material. This means that the material has two broad surfaces (i.e. faces) and two edge surfaces. It is preferred that the cross-section of the strip is flat, as opposed to concave or convex.

Anode cups used by many manufacturers of miniature zinc-air cells are made from strip stock, as described above, comprising two or more metal layers laminated together. Such a laminated strip generally comprises a relatively thick component which serves as the conductive substrate, this thick component usually being steel. The laminate is then formed by deposition of thinner coatings of a conductive metal, such as copper onto the surface of the thick steel component. In the present invention the conductive substrate may be a single layer, e.g. of steel, or it may be a laminate, for example of two or three layers, one of the layers being steel and another being, for example, copper.

In a further embodiment of the present invention, the surface of the anode cup opposing that contacting the anode, i.e. the surface directed outwards from the cell, may be coated, for example to prevent rusting of the surface of the conductive substrate which would otherwise be exposed to moisture in the air. Suitable coating materials include, for example, nickel. Nickel is the most preferred because of its bright appearance and its resistance to corrosion.

The miniature zinc-air cells of the present invention comprise a zinc-containing anode. Such electrodes are commonly used in cells of this type, and the construction of such electrodes is not essential to the present invention. The absence of mercury in this electrode is compensated for by the metal coating on the anode cup.

The present invention also provides a process for the manufacture of an anode cup suitable for use in a mercury free alkaline miniature zinc-air cell. This process comprises the steps of deposition of a layer of copper to form an underlayer, onto the surface of a conductive substrate, application by electroplating of indium, onto at least a portion of the underlayer, and forming the coated material into a cup shaped body, such that the coated portion is on the inside of the cup shaped body.

The preferred process for manufacturing an anode cup suitable for use in a cell according to the present invention is to plate one side of a steel strip, for example strip stock, as hereinabove described, with underlayer material. In a further step, the opposite side of the steel strip, i.e. that side not coated with copper, is plated with an outer layer, for example nickel Finally, indium is deposited onto as much of the copper layer as is required, thereby forming a multilayer strip. Discs, from which the anode cups are formed, are punched from the multilayer strip and are processed through conventional metal forming equipment to produce the anode cup. The processing must take place such that the indium layer forms the concave portion, or inner surface, of the cup, and the nickel coating forms the convex portion, or outer surface, of the cup.

Electroplating of the metal onto the surface of the conductive substrate offers several advantages when compared to other methods for depositing a metal onto the surface of the current collector of an alkaline cell. These advantages are listed below.
1. Electrodeposition of the indium onto the conductive substrate, for example strip stock, means that the uniformity of the metal plating can be accurately controlled. Clearly, the uniform deposition of a metal onto the surface of a pre-formed anode cup would present extreme difficulties, due to the cup configuration of this cell component.
2. Electroplating directly onto a conductive material in the form of strip stock enables the manufacturer to control with accuracy the location of the plated metal. Selective control of the plating process is of importance to the manufacturers of batteries. Alternative methods of plating, for example barrel plating, would not be appropriate in this instance. Pre-formed cups coated via barrel plating would be coated on both sides of the conductive substrate, due to the requirements of a barrel plating method. As discussed above, it is important that the metal coated onto the surface of the anode cup which contacts the anode does not also contaminate the opposing surface of the anode cup, i.e that surface which is directed away from the ceil.
3. Using an electroplating method, it is possible to control the thickness of metal applied to the substrate with greater accuracy. Thus, the preferred thickness of the metal, as discussed above, can be readily obtained using an electrodeposition process. Use of other, conventional plating techniques, such as the reliance upon metal Ions in the electrolyte to plate onto the surface of the anode cup, does not allow for the accurate deposition of the quantities of metal required by the present invention onto the surface of the anode cup.
4. In specific applications a discontinuous layer of metal coating is preferred. Use of an electroplating techinque allows for the accurate deposition of the metal onto the surface of the anode cup, and thereby allows for the deposition of a discontinuous layer. This is particularly the case, since there is an underlayer on the anode cup, and it is important that portions of this underlayer can contact the anode directly, so as to ensure that the impedance of the cell does not increase excessively when the cell is stored at high temperatures.
5. Yeta a further advantage of the present invention is that the electrodeposition technique is effective when chemical displacement of indium ions cannot be used. The chemical displacement process relies upon the presence of a reducing component, such as zinc, on the surface of the substrate, it the surface of the conductive substrate does not contain the reducing component, indium cannot be deposited by chemical deposition.

The alkaline miniature zinc-air cell of the present invention may then be formed by inserting a zinc-containing gel into the cavity defined by an anode cup, formed as hereinabove described, and then combining the filled anode cup with a cathode cup containing a metal oxide, for example manganese dioxide, this cup having at least one opening in order to permit air to enter the cell. A completed electrochemical cell results after the addition of a gasket, which gasket, typically made from plastic, such as nylon, so as to be electrically non-conductive, electrically separates the anode cup from the cathode cup and prevents leakage of the electrolyte from the cell.

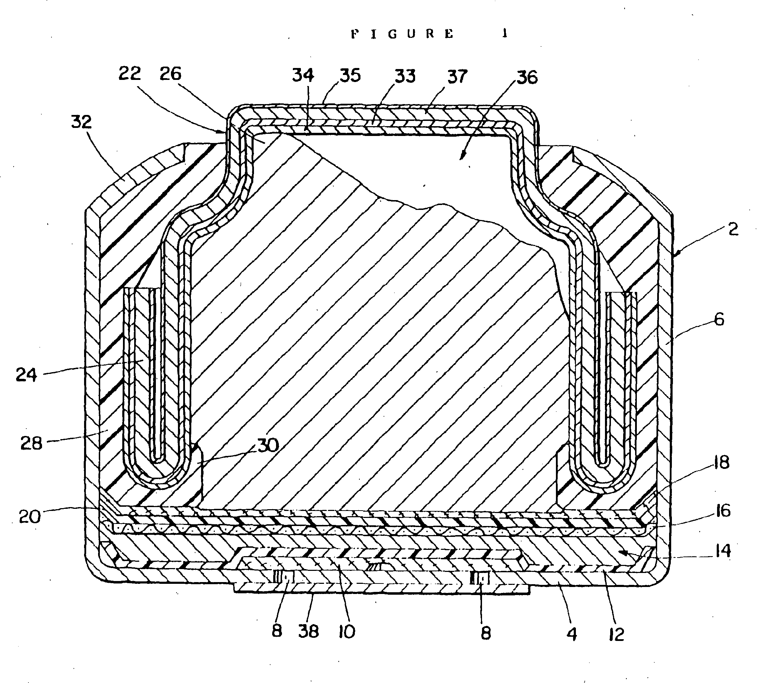

The present invention will now be further illustrated with reference to the accompanying drawing which shows, in cross-section, a miniature zinc-air cell employing an anode cup in accordance with the present invention.

As shown in the drawing, the largest component of the zinc-air cell is an open ended metal container 2, identified as a cathode cup. The cathode cup 2 is generally made from nickel plated steel that has been formed so that it has a relatively fiat central region 4 which is continuous with and surrounded by an upstanding wall 6 of uniform height. Two small holes 8 are punched into the bottom 4 of the cup 2 to act as air-entry ports. A layer of porous material 10 covers the interior surface of the air holes and acts as an air distribution membrane. A layer of polytetrafluoroethylene 12 covers the whole of the bottom of the cathode cup 2, including the air distribution membrane 10.

The second major component of the cell is an air electrode 14 which is positioned adjacent the inside surface of the polytetrafluoroethylene layer 12. This electrode 14 contains several components, including: a metal screen 16; a mixture of manganese oxides and carbon embedded in the screen 16; a barrier film 18 which prevents the anode's electrolyte from moving into the cathode 14; and a soakup separator 20.

The third component of the cell is a generally cup-shaped metal component 22 which forms the top of the cell and is generally referred to as the anode cup. In the figure, the edge 24 of the anode cup has been rolled backward upon Itself thereby creating a double wall. The anode cup 22 can be made from a trilaminate material comprising copper 33 that has been laminated to the bare side of a nickel-clad steel strip. A nickel layer 35 protects the exterior surface of steel strip 37, which is located between nickel layer 35 and copperlayer 33. Other laminated materials from which the anode cup may be made include a bilaminate, for example copper on a stainless steel substrate, or a laminate made from more than three layers. Round disks punched from this laminated metal strip are then formed into anode cups. In this figure, the copper layer 33 forms the inside surface of the anode cup and directly contacts the anodic mixture.

The fourth component of the cell is the anodic mixture 26, which can comprise a mixture of zinc particles, electrolyte and organic compounds, such as binders and corrosion inhibitors, which make up the battery's anode. A tubular shaped ring or gasket 28, made from an elastomeric material, serves as the seal. The bottom edge of the gasket 28 has bean formed to create an inwardly facing lip 30 which abuts the rim of the anode cup 22 The cathode cup 2, along with the inserted air electrode 14 and associated membranes, are inverted and pressed against the anode cup/gasket assembly, which are preassembled. While inverted, the edge of the cathode cup 2 is colleted inward. The rim 32 of the cathode cup is then compressed against the elastomeric gasket 28 between the cathode cup 2 and the anode cup 22, thereby forming a seal and an electrical barrier between the anode cup 22 and the cathode cup 2. A suitable tape 38 can be placed over the opening 8 until the cell is ready for use.

In accordance with the present invention, a layer of indium 34 (shown exaggerated) is deposited on one side of the anode disc before it is formed into a cup 22. As shown in the drawing, the indium layer 34 forms the inner surface of cup 22 defining a cavity 36 into which the anodic mixture 26 is fed. As stated above, the indium layer may be a continuous layer or a discontinuous layer. Since the underlayer of the interior surface of the cup 22 in this embodiment is copper 33, the chemical displacement process used in the art can not be used since this process relies on the presence of zinc or some other reducing component.

The following examples illustrate the advantages of the cells of the present invention and are not intended to limit the scope of the invention in any way.

### EXAMPLE 1

Several batches of miniature zinc-air cells were assembled in order to evaluate the impact of electroplating indium on to the surface of the anode cup that contacts the anode. All cells measured approximately 11.557 mm [0.455 inch] in diameter by 5.33 mm [0.210 inch] in height. These batteries are commonly referred to as "675 size".

In the first of two tests, the control batch, designated Batch A, contained 6 % mercury (mercury/zinc ratio) in the anode, and the anode cup was not plated with indium. Batch B had no mercury in the anode and no indium plated onto the anode cup. Batches C to G had no mercury in the anode, but the anode cups were plated with the following thicknesses of indium:
Batch C, 0.0254 µm [one microinch];
Batch D, 0.0762 µm [three microinches]:
Batch E, 0.381 µm [fifteen microinches]:
Batch F, 0.762 µm [thirty microinches]: and
Batch G, 1.27 µm [fifty microinches].

Each Batch was separated into four sublots consisting of three cells each. All cells were then discharged continuously across a 625 ohm resister to 0.9 volts. The test conditions for the cells varied as follows.
A. The first sublot was tested within a few days after the cells had been assembled. The second sublot was aged for one week at 71°C and then tested. The third sublot was aged for twenty days at 60°C prior to testing. The fourth sublot was aged for forty days at 60°C and then tested.
The charge for each sublot (measured in milliamphours) to the designated cutoff is shown in Table 1. These data support the unexpected conclusion that, when comparing the first three sublots, all cells in Batches C to G, i.e. those with indium plated anode cups but no mercury in the anode, provided more service than comparably aged cells in Batch A (6% mercury and no indium) or Batch B (no mercury and no indium).
A clear conclusion cannot be drawn from the cells which were aged for forty days at 60°C (i.e. the fourth sublot in each case) because the cells from two of the five indium plated batches provided better service than the control, while the cells from two other batches provided slightly less service and those from one batch had significantly less service. These inconsistent results are not unusual for cells tested at the relatively high temperature of 60°C for forty days, because some factor other than the collector/anode interface controls cell behaviour under these conditions.

**Table I**

| | | A | B | C | D | E | F | G |
|---|---|---|---|---|---|---|---|---|
| | | 6% Hg/Zn | Zero Hg indium plating thickness | | | | | |
| Sub lot | Cell Age | (non-plated) | (non-plated) | 0.0254 µm | 0.762 µm | 0.381 µm | 0.762 µm | 1.27 µm |
| | | | | | | | | |
| | | | | | | | | |
| 1 | initial | 494 | 477 | 533 | 533 | 520 | 516 | 516 |
| | | | | | | | | |
| 2 | 1 wk at 71°C | 494 | 461 | 532 | 533 | 511 | 517 | 504 |
| | | | | | | | | |
| 3 | 20 days at 60°C | 496 | 443 | 500 | 491 | 511 | 502 | 510 |
| | | | | | | | | |
| 4 | 40 days at 60°C | 491 | 461 | 504 | 487 | 480 | 504 | 423 |

B. Five cells from each of the batches and sublots were impedance tested after storage at 71°C. These data are shown in Table II. These data support the unexpected conclusion that mercury-free miniature alkaline zinc-air cells which contain indium-electroplated anode cups did provide significantly lower impedance values when compared to similarly aged cells containing no mercury and no indium, and comparable impedance when compared to cells containing six percent mercury and no indium.

**Table II**

| | A | B | C | D | E | F | G |
|---|---|---|---|---|---|---|---|
| | 6% Hg/Zn | Zero Hg indium plating thickness | | | | | |
| cell age | (non-plated) | (non-plated) | 0.0254 µm | 0.762 µm | 0.381 µm | 0.762 µm | 1.27µm |
| initial | 6.3 | 7.5 | 6.9 | 7.7 | 5.4 | 5.6 | 5.3 |
| | | | | | | | |
| 2 weeks | 8.0 | 20.2 | 6.6 | 7.4 | 8.1 | 8.4 | 5.3 |
| 4 weeks | 8.9 | 35.0 | 9.8 | 9.7 | 9.5 | 10.3 | 3.8 |
| 6 weeks | 8.4 | 73.0 | 10.4 | 10.0 | 10.3 | 11.7 | 11.7 |
| 8 weeks | 9.0 | * | 10.2 | 11.4 | 12.7 | 14.1 | 13.1 |

| | | | | | | | |
|---|---|---|---|---|---|---|---|
| * Test stopped due to cell leakage. | | | | | | | |

### EXAMPLE 2

Several batches of miniature zinc-air cells were assembled in order to evaluate the impact of electroplating indium onto the surface of the anode cup contacting the anode. These cups were then incorporated into cells which also contained 0.2 mg of indium in the anode mass per gram of zinc. The indium was added to the zinc as indium hydroxide.

As in Example 1, all batteries in this test measured approximately 11.557 mm [0.455 inch] in diameter by 5.33 mm [0.210 inch] in height. The composition of the anode cup in the control batch in this Example, designated Batch A, was identical to that in the control Batch in Example 1. The cells in this batch did not have indium hydroxide added to the anode. Batch H contained no mercury, no indium plated on the anode cup and 0.2 mg of indium in the anode mass per gram of zinc. Batches I and J were identical to Batch H except that their anode cups were electroplated with indium approximately 0.0254 µm [one microinch] thick and 0.0762 µm [three microinches] thick, respectively.

Each batch was separated into four sublots consisting of three cells each. All cells were then discharged continuously across a 625 ohm resistor to 0.9 volts. The test conditions for the cells varied as follows.
A. The first sublot was tested within a few days after the cells had been assembled. The second, third and fourth sublots were aged prior to testing for one week at 71°C; twenty days at 60°C and forty days at 60°C, respectively. The charge for each sublot (measured in milliamphours) to the designated cutoff is shown in Table III. The data support the conclusion that all cells in the first three sublots of Batches I and J, i.e. those with indium plated anode cups and no mercury in the anode, provided more service than comparably aged cells in Batch A or Batch H. A clear conclusion cannot be drawn from the cells which were aged for forty days at 60°C, i.e. the fourth sublot in each case, because, in these sublots, the cells from Batch I provided less service than the cells from Batch A, while the cells from Batch J provided more service than the cells from Batch A. As was explained earlier, this type of anomaly in service data is not unusual when cells are stored for a relatively long time (i.e. forty days) at a relatively high temperature (60°C).

**Table III**

| | | A | I | J | H |
|---|---|---|---|---|---|
| | | 6 % Hg/Zn | Indium Plating Thickness | | Zero Hg |
| Sub Lot | Cell Age | (non-plated) | 0.0254µm* | 0.0762µm* | (non-plated)* |
| | | | | | |
| 1 | Initial | 494 | 514 | 544 | 507 |
| 2 | 1 wk at 71°C | 494 | 515 | 526 | 480 |
| 3 | 20 Days at 60°C | 496 | 510 | 510 | 483 |
| 4 | 40 Days at 60°C | 491 | 485 | 523 | 455 |

| | | | | | |
|---|---|---|---|---|---|
| * 0.2 mg indium/gm zinc added as indium hydroxide | | | | | |

B. Five cells from each of the batches and sublots having the compositions shown above were impedance tested after storage at 71 °C. The results are shown in Table IV (charge is measured in milliamphours).

These data support the conclusion that mercury-free miniature alkaline zinc-air cells which contained indium hydroxide in the anode and indium-electroplated anode cups did provide lower impedance values when compared to both similarly aged cells containing no mercury, no indium electroplated onto the anode cup, but indium hydroxide in the anode, or cells containing six percent mercury and no indium at all.

**Table IV**

| | A | I | J | H |
|---|---|---|---|---|
| | 6% Hg/Zn | Indium Plating Thickness | | Zero Hg |
| Cell Age | (non-plated) | 0.0254µm* | 0.0762 µm* | (non-plated) |
| | | | | |
| Initial | 6.3 | 8.0 | 6.7 | 7.4 |
| 2 weeks | 8.0 | 7.1 | 7.3 | 10.6 |
| 4 weeks | 8.9 | 7.6 | 8.3 | 11.6 |
| 6 weeks | 8.4 | 7.4 | 8.5 | 16.5 |
| 8 weeks | 9.0 | 7.9 | 8.9 | 19.9 |

The following conclusions can be deduced by comparing the service and impedance data in Example 1 and Example 2.
(a) The addition of 0.2 mg of indium per gram of zinc to the anode mass of mercury-free miniature alkaline zinc-air cells which contain indium-electroplated anode cups did not significantly improve or detract from service performance on a 625 ohm continuous test.
(b) The addition of 0.2 mg of indium per gram of zinc to the anode mass of mercury-free miniature alkaline zinc-air cells which contain indium-electroplated anode cups did improve the impedance of cells stored at 71°C.

## Claims

1. A mercury free alkaline miniature zinc-air cell including a zinc-containing anode (26), and an anode cup (22), the cup physically and electrically contacting the anode and consisting of a conductive substrate (37), **characterised in that** a surface of the cup contacting the anode is at least partially coated to form an underlayer with copper (33), at least a portion of said underlayer being overlaid with indium (34).

2. A cell according to claim 1 in which the indium coating (34) is from 0.0127 µm to 1.27 µm thick.

3. A cell according to claim 1 in which the indium coating (34) is from 0.0254 µm to 0.0762 µm thick.

4. A-cell according to any one of claims 1 to 3 in which the indium coating (34) is discontinuous.

5. A cell according to claim 1, in which the underlayer (33) is more than 0.0254 µm thick, preferably more than 2.54 µm thick.

6. A cell according to claim 5 in which the underlayer (33) is from 25.4 µm to 50.8 µm thick.

7. A cell according to any preceding claim in which the underlayer (33) is substantially totally overlaid with indium (34).

8. A cell according to any preceding claim in which the surface of the anode cup (22) opposing that contacting the anode is coated with a layer of nickel.

9. A cell according to any preceding claim in which the conductive substrate (37) is steel or brass.

10. A cell according to claim 9 in which the conductive substrate (37) is cold rolled steel.

11. A cell according to any preceding claim in which the zinc-containing anode (26) contains a small amount of indium.

12. A process for the manufacture of an anode cup (22) suitable for use in a cell as defined in claim 1, which process comprises deposition of a layer of copper, to form an underlayer (33), onto one surface of a conductive substrate (37), application by electroplating of indium (34), onto at least a portion of said underlayer (33), and forming the coated material into a cup-shaped body, such that the coated portion is on the inside of the cup-shaped body.

13. A process according to claim 12 in which the conductive substrate (37) is a steel strip.

14. A process according to claim 13 in which the conductive substrate (37) comprises a laminate of two or more layers.

15. A process according to claim 14 in which the conductive substrate (37) comprises a steel strip which is coated on one surface with a layer of nickel and on the other side with copper.

16. A process according to claim 14 which comprises plating one side of a steel strip (37) with copper, plating the other side of the steel strip with nickel, and then electroplating indium onto the copper layer.

17. A process according to any one of claims 12 to 16 in which the indium is applied by electrodeposition.

18. A mercury free miniature zinc-air cell employing a manganese dioxide-containing cathode (14) and a zinc-containing anode (26) assembled within a conductive housing comprising a cathode cup (2) having at least one opening (8) to permit air to enter and said cathode cup (2) being electrically contacted to the manganese dioxide containing electrode (14); an anode cup (22) electrically and physically contacted to the zinc-containing electrode (26); said cathode cup (2) secured to and insulated from the anode cup (22); and said anode cup (22) comprising a conductive substrate (37) having on a portion of at least the inner surface contacted to the zinc-containing electrode (26) an underlayer (33) of copper and a top layer (34) of indium.

## Patentansprüche

1. Quecksilberfreie alkalische Zink-Luft-Miniaturzelle mit einer zinkhaltigen Anode (26) und einem Anodenbecher (22), wobei der Becher körperlich und elektrisch mit der Anode in Kontakt ist und aus einem leitfähigen Träger (37) besteht, **dadurch gekennzeichnet, dass** eine Oberfläche des Bechers, die mit der Anode in Kontakt ist, zur Bildung einer Unterschicht zumindest teilweise mit Kupfer (33) beschichtet ist, wobei zumindest ein Teil der Unterschicht mit Indium (34) überzogen ist.

2. Zelle nach Anspruch 1, wobei der Überzug (34) aus Indium 0,0127 µm bis 1,27 µm dick ist.

3. Zelle nach Anspruch 1, wobei der Überzug (34) aus Indium 0,0254 µm bis 0,0762 µm dick ist.

4. Zelle nach einem der Ansprüche 1 bis 3, wobei der Überzug (34) aus Indium diskontinuierlich ist.

5. Zelle nach Anspruch 1, wobei die Unterschicht (33) dicker als 0,0254 µm, vorzugsweise dicker als 2,54 µm ist.

6. Zelle nach Anspruch 5, wobei die Unterschicht (33) 25,4 µm bis 50,8 µm dick ist.

7. Zelle nach einem der vorstehenden Ansprüche, wobei die Unterschicht (33) im wesentlichen ganz mit Indium (34) überzogen ist.

8. Zelle nach einem der vorstehenden Ansprüche, wobei die Oberfläche des Anodenbechers (22), die der mit der Anode in Kontakt befindlichen Oberfläche gegenüberliegt, mit einer Nickelschicht überzogen ist.

9. Zelle nach einem der vorstehenden Ansprüche, wobei der leitfähige Träger (37) Stahl oder Messing ist.

10. Zelle nach Anspruch 9, wobei der leitfähige Träger (37) kaltgewalzter Stahl ist.

11. Zelle nach einem der vorstehenden Ansprüche, wobei die zinkhaltige Anode (26) einen geringen Anteil Indium enthält.

12. Verfahren zur Herstellung eines Anodenbechers (22), der zur Verwendung in einer Zelle gemäß der Definition in Anspruch 1 geeignet ist, wobei das Verfahren die folgenden Schritte aufweist: Abscheiden einer Schicht aus Kupfer zur Bildung einer Unterschicht (33) auf einer Oberfläche eines leitfähigen Trägers (37), Aufbringen von Indium (34) durch Elektroplattieren zumindest auf einen Teil der Unterschicht (33) und Formen des beschichteten Materials zu einem becherförmigen Körper, so dass der beschichtete Teil an der Innenseite des becherförmigen Körpers liegt.

13. Verfahren nach Anspruch 12, wobei der leitfähige Träger (37) ein Stahlband ist.

14. Verfahren nach Anspruch 13, wobei der leitfähige Träger (37) ein Laminat aus zwei oder mehr Schichten ist.

15. Verfahren nach Anspruch 14, wobei der leitfähige Träger (37) ein Stahlband aufweist, das an einer Oberfläche mit einer Nickelschicht und an der anderen Seite mit Kupfer überzogen ist.

16. Verfahren nach Anspruch 14 mit den Schritten: Beschichten einer Seite eines Stahlbandes (37) mit Kupfer, Beschichten der anderen Seite des Stahlbandes mit Nickel, und anschließend Elektroplattieren von Indium auf die Kupferschicht.

17. Verfahren nach einem der Ansprüche 12 bis 16, wobei das Indium durch elektrolytische Abscheidung aufgebracht wird.

18. Quecksilberfreie Zink-Luft-Miniaturzelle mit einer mangandioxidhaltigen Kathode (14) und einer zinkhaltigen Anode (26), montiert innerhalb eines leitfähigen Gehäuses mit einem Kathodenbecher (2), der mindestens eine Öffnung (8) aufweist, um Luft eintreten zu lassen, und wobei der Kathodenbecher (2) in elektrischem Kontakt mit der mangandioxidhaltigen Elektrode (14) ist; einem Anodenbecher (22) der elektrisch und körperlich mit der zinkhaltigen Elektrode (26) in Kontakt ist; wobei der Kathodenbecher (2) an dem Anodenbecher (22) befestigt und gegen diesen isoliert ist; und wobei der Anodenbecher (22) einen leitfähigen Träger (37) aufweist, der auf einem Teil zumindest der Innenfläche, die mit der zinkhaltigen Elektrode (26) in Kontakt ist, eine Unterschicht (33) aus Kupfer und eine Deckschicht (34) aus Indium aufweist.

## Revendications

1. Pile alcaline zinc-air miniature sans mercure comprenant une anode (26) contenant du zinc et une coupelle d'anode (22), la coupelle étant en contact physique et électrique avec l'anode et étant constituée d'un substrat conducteur (37), **caractérisée en ce qu'**une surface de la coupelle en contact avec l'anode est au moins partiellement revêtue pour former une sous-couche de cuivre (33), au moins une partie de ladite sous-couche étant recouverte d'indium (34).

2. Pile selon la revendication 1, dans laquelle le revêtement d'indium (34) a une épaisseur de 0,0127 µm à 1,27 µm.

3. Pile selon la revendication 1, dans laquelle le revêtement d'indium (34) a une épaisseur de 0,0254 µm à 0,0762 µm.

4. Pile selon l'une quelconque des revendications 1 à 3, dans laquelle le revêtement d'indium (34) est discontinu.

5. Pile selon la revendication 1, dans laquelle la sous-couche (33) a une épaisseur de plus de 0,0254 µm, de préférence de plus de 2,54 µm.

6. Pile selon la revendication 5, dans laquelle la sous-couche (33) a une épaisseur de 25,4 µm à 50,8 µm.

7. Pile selon l'une quelconque des revendications précédentes, dans laquelle la sous-couche (33) est recouverte de manière sensiblement totale par l'indium (34).

8. Pile selon l'une quelconque des revendications précédentes, dans laquelle la surface de la coupelle d'anode (22) opposée à celle en contact avec l'anode est revêtue d'une couche de nickel.

9. Pile selon l'une quelconque des revendications précédentes, dans laquelle le substrat conducteur (37) est de l'acier ou du laiton.

10. Pile selon la revendication 9, dans laquelle le substrat conducteur (37) est de l'acier laminé à froid.

11. Pile selon l'une quelconque des revendications précédentes, dans laquelle l'anode (26) contenant du zinc contient une faible quantité d'indium.

12. Procédé de fabrication d'une coupelle d'anode (22) convenant à une utilisation dans une pile telle que définie dans la revendication 1, lequel procédé comprend le dépôt d'une couche de cuivre pour former une sous-couche (33) sur une surface d'un substrat conducteur (37), l'application par électrodéposition d'indium (34) sur au moins une partie de ladite sous-couche (33) et la conformation du matériau revêtu en corps en forme de coupelle, de façon que la partie revêtue se situe sur l'intérieur du corps en forme de coupelle.

13. Procédé selon la revendication 12, dans lequel le substrat conducteur (37) est une bande d'acier.

14. Procédé selon la revendication 13, dans lequel le substrat conducteur (37) comprend un stratifié de deux couches ou plus.

15. Procédé selon la revendication 14, dans lequel le substrat conducteur (37) comprend une bande d'acier qui est revêtue, sur une surface, d'une couche de nickel et, sur l'autre face, de cuivre.

16. Procédé selon la revendication 14, qui comprend le plaquage d'une face d'une bande d'acier (37) par du cuivre, le plaquage de l'autre face de la bande d'acier par du nickel et, ensuite, l'électrodéposition d'indium sur la couche de cuivre.

17. Procédé selon l'une quelconque des revendications 12 à 16, dans lequel l'indium est appliqué par électrodéposition.

18. Pile zinc-air miniature sans mercure utilisant une cathode (14) contenant du dioxyde de manganèse et une anode (26) contenant du zinc assemblées dans un boîtier conducteur comprenant une coupelle de cathode (2) ayant au moins une ouverture (8) pour permettre à l'air de pénétrer et ladite coupelle de cathode (2) étant en contact électrique avec l'électrode (14) contenant le dioxyde de manganèse ; une coupelle d'anode (22) en contact électrique et physique avec l'électrode (26) contenant le zinc ; ladite coupelle de cathode (2) étant fixée à la coupelle d'anode (22) et isolée de celle-ci ; et ladite coupelle d'anode (22) comprenant un substrat conducteur (37) ayant, sur une partie d'au moins la surface interne en contact avec l'électrode (26) contenant du zinc, une sous-couche (33) de cuivre et une couche supérieure (34) d'indium.
